# EUROPÄISCHE PATENTSCHRIFT

(11) **EP 1 018 396 B1**
(45) Veröffentlichungstag und Bekanntmachung des Hinweises auf die Patenterteilung: **19.03.2003**
(21) Anmeldenummer: 99124690.1
(22) Anmeldetag: 11.12.1999
(51) Int. Cl.: B23P 15/24, B30B 11/28, B01J 2/22

(54) **Verfahren zur Herstellung eines verzahnten Teiles für eine Vorrichtung zum Pelletieren von schüttfähigen Massen**
Manufacturing method for a geared part of an apparatus for pelletizing pourable material
Procédé de fabrication d' une pièce dentée pour un dispositif de pelletisation d' une matière coulante

(30) Priorität: 07.01.1999 DE 19900352
(43) Veröffentlichungstag der Anmeldung: 12.07.2000
(73) Patentinhaber: Kühlmann, Josef, D-48366 Laer (DE)
(72) Erfinder: Kühlmann, Josef, D-48366 Laer (DE)
(74) Vertreter: Habbel, Hans-Georg, Dipl.-Ing.

(56) Entgegenhaltungen:
- EP-A- 0 853 973
- DATABASE WPI Section Ch, Week 199241 Derwent Publications Ltd., London, GB; Class D14, AN 1992-338688 XP002133592 -& SU 1 690 839 A (MURMANSK HIGH NAVAL COLLEGE), 15. November 1991 (1991-11-15)

## Beschreibung

Die Erfindung bezieht sich auf ein Verfahren zur Herstellung eines verzahnten Teiles für eine Vorrichtung zum Pelletieren von schüttfähigen Massen, insbesondere getrocknetem Hühnerkot gemäß dem Oberbegriff des Hauptanspruches.

Ein gattungsbildendes Verfahren und eine Vorrichtung zum Pelletieren von schüttfähigen Massen, insbesondere Hühnerkot, ist aus der DE 197 01 673 C1 bekannt.

Aus der EP 465 811 ist es bekannt, den in Geflügelzuchtbetrieben anfallenden Hühnerkot zu trocknen um ihn dann im getrockneten Zustand weiter zu verwerten, beispielsweise als Düngemittel.

Der in Geflügelzuchtbetrieben anfallende Hühnerkot ist stark verunreinigt, z.B. durch Futterreste, Federn, Einstreu usw. Hühnerkot enthält außerdem einen hohen Anteil an Mineralstoffen, wie Sand, kleine Kieselsteine od.dgl., die die Tiere aufnehmen, um damit die Vorverdauung im Kropf des Tieres zu verbessern. Durch die aufgenommenen Steinchen werden die aufgenommenen Körner zerrieben und damit aufgeschlossen.

Aus der gattungsbildenden DE 197 01 673 C1 ist es weiterhin bekannt, den getrockneten Hühnerkot zu pelletieren, um damit die Handhabung des getrockneten Kotes für den Anwender noch zu vereinfachen.

Grundsätzlich sind Vorrichtungen zum Pelletieren von schüttfähigen Massen bekannt, wobei diese Vorrichtungen im wesentlichen aus zwei miteinander kämmenden hohlen Zahnrädern einer Zahnradpaarung bestehen, von denen wenigstens eines angetrieben ist, wobei der Zahnkranz beider Zahnräder Bohrungen aufweist, die vom Tiefsten einer Zahnlücke zu einem Innenhohlraum führen und der Raum der Zahnlücken in radialer Richtung vom Radius des Fußkreises bis zum Radius des Teilkreises in axialer Richtung nach außen hin durch Abschlußmittel abgeschlossen ist. Üblicherweise bestehen diese Abschlußmittel aus auf die Außenseite der Zahnräder aufgeschraubte oder sonstwie befestigte Abschlußplatten oder Abschlußringe, wobei diese Abschlußringe in das Material des Zahnrades eingebettet werden können, um somit die erforderliche feste Lagerung dieser Abschlußringe zu erreichen. Es ist auch bereits vorgeschlagen worden, diese Verschlußmittel durch den Werkstoff des Zahnrades selbst zu bilden.

Die vorliegende Erfindung bezieht sich auf einen Lösungsvorschlag um diese letztgenannte Ausbildung, bei der also der Raum der Zahnlücken nach außen hin durch materialeinheitliche, aus einem Zahnradrohling ausgeformte Mittel erstellt wird

Diese der Erfindung zugrundeliegende Aufgabe wird durch die Lehre des Hauptanspruches gelöst.

Vorteilhafte Ausgestaltungen der Erfindung sind in dem Unteranspruch erläutert.

Mit anderen Worten ausgedrückt wird vorgeschlagen, daß von einem topfförmigen, runden Zahnradrohling ausgegangen wird, der an seiner Außenseite in axialer Richtung gesehen eine stufenförmige Erhebung aufweist, die über den übrigen Umfangsbereich des Zahnradrohlinges vorsteht und dem maximalen Umfang und Durchmesser des fertigen Zahnrades entspricht. In diese stufenförmige Erhebung werden große Bohrungen erstellt, deren Außendurchmesser der Zahnlückenweite der gewünschten Zahnlücke entspricht und deren Anzahl im wesentlichen der Breite der stufenförmigen Erhebung bzw. der zu bildenden Zahnlücke entsprechen, wobei die Tiefe dieser Bohrungen in dem Bereich der stufenförmigen Erhebung der Höhe der zu bildenden Zahnlücke entspricht.

Anschließend werden in diesen großen Bohrungen Bohrungen kleineren Durchmessers eingebracht, die bis in den Innenhohlraum der Zahnräder führen, also eine Verbindung von der Außenseite zur Innenseite des zu bildenden Zahnrades herstellen.

Anschließend werden mit einem Fräswerkzeug die stehengebliebenen Ränder der großen Bohrungen abgefräst, d. h. gesäubert und durch Abfräsen der beiden äußeren Kanten der stufenförmigen Erhebungen die Zahnlücke nach außen hin geöffnet.

In diesem Stadium sind also die Zahnlücken zwischen den verbleibenden Zähnen offen und bilden richtige Zahnlücken, während aber die Zähne nach außen hin; d. h. also deren Kanten in axialer Richtung gesehen noch eckig ausgebildet sind.

Gemäß der Erfindung werden nunmehr diese axialen Kanten der Zähne ebenfalls abgerundet.

Auf diese Weise werden der stufenförmigen Erhebung entsprechende Zähne gebildet, wobei zwischen diesen Zähnen Vertiefungen im Material des Zahnrohlinges gebildet werden und die an ihren Stimkanten abgerundeten Zähne in diese Vertiefungen eingreifen können und nunmehr in der Lage sind, das sich in diesen Vertiefungen befindende Material zu komprimieren und durch die kleinen Bohrungen in den Zahnradinnenraum zu pressen.

Das Herstellungsverfahren eines solchen Zahnrades ist auf den modernen, computergesteuerten Maschinen schnell und problemlos durchzuführen und es werden Zahnräder geschaffen, bei denen die Zahnlücken, in denen der hohe Kompressionsdruck auftritt, so stabil ausgebildet sind, daß die Wandungen der Zahnlücken diesem hohen Druck widerstehen können.

Ein Ausführungsbeispiel der Erfindung wird nachfolgend anhand der Zeichnungen erläutert. Die Zeichnungen zeigen dabei in
- Fig. 1: einen Zahnradrohling, in
- Fig. 2: den Zahnradrohling gemäß Fig. 1 mit eingebrachten großen Bohrungen, in
- Fig. 3: den vorbearbeiteten Zahnradrohling gemäß Fig. 2 mit eingebrachten kleinen Bohrungen, in
- Fig 4: in größerem Maßstab die Fertigstellung der Zahnlücken mit den vertieften Aufnahmeräumen und in
- Fig. 5: schematisch einen Schnitt durch eine Zahnradpaarung.

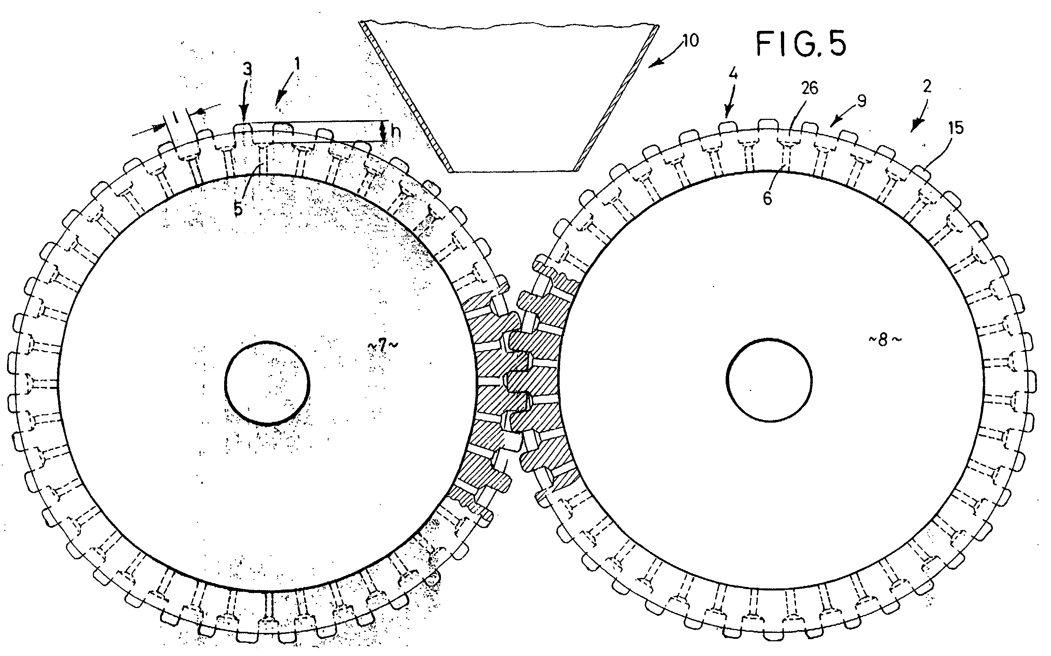

In Fig. 5 sind zwei verzahnte Teile 1 und 2 dargestellt, die Zähne 15 aufweisen, wobei zwischen den Zähnen 15 Zahnlücken 9 gebildet werden. Im Inneren der verzahnten Teile 1 und 2 ist ein Innenhohlraum 7 bzw. 8 vorgesehen, der von den Zahnkränzen 3 und 4 der Teile 1 und 2 in radialer Richtung umschlossen wird.

Im Tiefsten der Zahnlücken 9 sind Bohrungen 5 und 6 vorgesehen, die in den Innenhohlraum 7 bzw. 8 führen und aus der Darstellung in Fig. 5 ist erkennbar, daß dann, wenn die beiden Teile 1 und 2 miteinander kämmen, die Zähne 15, die beispielsweise aus einem Vorratstrichter 10 zugeführte, schüttfähige Masse komprimieren und in Aufnahmeräume 26 hineinpressen und dabei durch die jeweiligen Bohrungen 5 und 6 hindurchtreiben. Auf diese Weise wird die Masse komprimiert und zerkleinert, beispielsweise größere Bestandteile werden zerschnitten und die Masse wird dann von den Zähnen 15 in die Innenhohlräume 7 und 8 geführt. Die hier vorgesehenen Mittel zum Abführen, Sammeln und ggf. Zerkleinern der Pellets sind in der Zeichnung nicht dargestellt, ebenso nicht die Mittel, die dem Antrieb der beiden Teile 1 und 2 dienen.

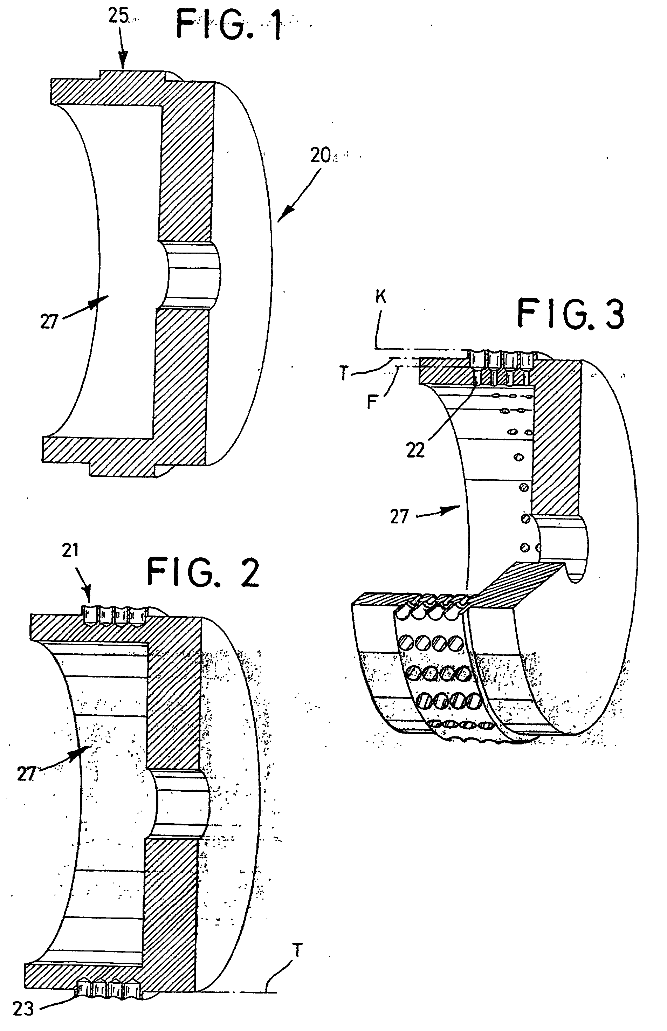

In Fig. 1 ist ein Zahnradrohling 20 dargestellt, der topfförmig ausgebildet ist und an seinem Außenumfang eine stufenförmige Erhebung 25 aufweist, deren Außendurchmesser dem endgültigen Außendurchmesser der Teile 1 und 2 entspricht, d. h. also dem Außendurchmesser des Zahnkranzes 3 bzw. 4.

In die stufenförmige Erhebung 25 werden Bohrungen 21, die im nachfolgenden als große Bohrungen 21 bezeichnet werden, eingebracht und die von der Oberseite der stufenförmigen Erhebung 25 diese durchquerend bis in die Wandung des Zahnradrohlings 20 vorgetrieben werden.

Anschließend werden durch diese großen Bohrungen 21 hindurch kleine, Bohrungen 22 geführt, die bis in den Innenraum des topfförmigen Zahnradrohlinges führen. In Fig. 3 ist dabei mit K der Kopfkreis des zu bildenden Zahnrades, mit T der Teilkreis der Zähne des zu bildenden Zahnrades und mit F der Fußkreis der Zähne bezeichnet.

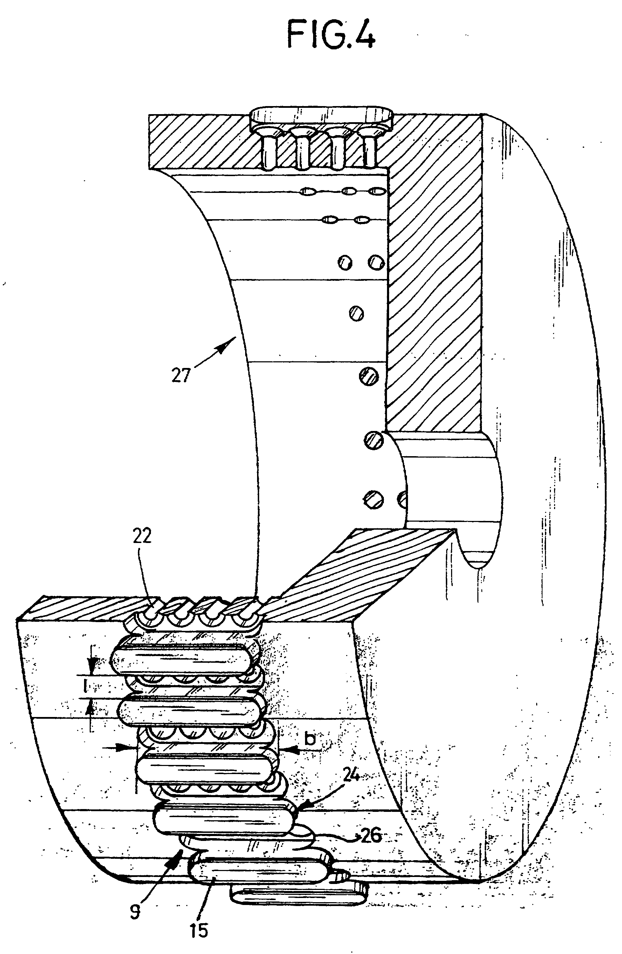

Anschließend werden-beispielsweise mit einen Fingerfräser die zwischen den großen Bohrungen bestehenden Wandbereiche gesäubert, d. h. entfernt und auch die Außenkanten 23 der großen Bohrungen entfernt, so daß damit die Zahnlücken 9 gebildet werden, wie dies deutlich die Fig. 4 zeigt und gleichzeitig ein Aufnahmeraum 26 geschaffen wird, in den die eigentlichen Zähne 15 eingreifen können. Da die Aufnahmeräume 26 in ihren axialen Randbereichen aufgrund der großen Bohrungen 21 abgerundet ausgebildet sind, müssen auch die Stirnkanten 24 der Zähne 9 abgerundet ausgebildet werden, was ebenfalls mit dem die zwischen den großen Bohrungen 21 befindlichen Wandungen und die Kanten 23 entfernenden Fingerfräser durchgeführt werden kann. Auf diese Weise weisen die gebildeten Zahnlücken zwischen den Zähnen 15 eine Weite l auf und die Breite der Zahnlücken eine Breite b, wobei die Breite der Zahnlücken b gleichzeitig der in axialer Richtung gesehenen Länge des Aufnahmeraumes 26 entspricht. In Fig. 4 sind auch die hergestellten kleinen Bohrungen 22 erkennbar, die bis in den Innenraum des Zahnradrohlinges 20 führen.

## Patentansprüche

1. Verfahren zur Herstellung eines verzahnten Teiles (1, 2) für eine Vorrichtung zum Pelletieren von schüttfähigen Massen, insbesondere getrockneten Hühnerkot, wonach in einem topfförmigen Zahnradrohling (20), der an seinem Außenumfang eine stufenförmige Erhebung (25) aufweist, die dem Außendurchmesser des zu erstellenden Zahnkranzes (3, 4) entspricht, im Bereich der zu erstellenden Zahnlücken (9) Bohrungen eingebracht werden und danach durch Fräsen Zähne (15) in die Erhebung (25) eingebracht werden, **dadurch gekennzeichnet, daß**
- zunächst in dem topfförmigen Zahnradrohling (20) in der stufenförmigen Erhebung (25) im Bereich der zu erstellenden Zahnlücken (9) Bohrungen (21) derart eingebracht werden, daß deren Außendurchmesser der Zahnlückenweite (l) der gewünschten Zahnlücke (9) entsprechen und deren Anzahl im wesentlichen der Breite (6) der Zahnlücke (9) und deren Tiefe der Höhe (h) der Zahnlücke (9) entspricht,
- danach in den Bohrungen (21) Bohrungen (22) kleineren Durchmessers bis in den Innenhohlraum (7, 8) des topfförmigen Zahnradrohlings (20) eingebracht werden und
- abschließend mit einem Fräswerkzeug die Zahnlücken (9) gesäubert werden, so daß Zähne (15) entstehen und die über den Teilkreis (T) überstehenden Stirnkanten (24) der Zähne (15) abgerundet werden.

2. Verfahren nach Anspruch 1, **dadurch gekennzeichnet, daß** als Fräswerkzeug ein Fingerfräser verwendet wird.

## Claims

1. A manufacturing method for manufacture of a geared part (1, 2) of an apparatus for pelletizing pourable material, in particular dried chicken manure, according to which holes are drilled in a pot-shaped gear blank (20) within the area of the tooth spaces (9) to be cut, having a stepped raised section (25) around its perimeter corresponding to the external diameter of a sprocket wheel (3, 4) to be produced, followed by milling teeth (15) into the raised section (25), **characterized in that**
- initially holes (21) are drilled into the pot-shaped gear blank (20) in the stepped raised section (25) within the area of the tooth spaces (9), in a manner that their external diameters correspond to the size (I) of the tooth spaces (9) and their number essentially corresponds to the width (6) of the tooth spaces (9) and their depth to the height (h) of the tooth spaces (9);
- followed by holes (22) of a smaller diameter being drilled in the holes (21) down to the internal cavity (7, 8) of the pot-shaped gear blank (20) and finally the tooth spaces (9) being cleaned by a milling tool, thus cutting teeth (15) and rounding off the leading edges (24) projecting over the reference circle (T).

2. Method according to Claim 1, **characterized in that** an end milling cutter is used as a milling tool.

## Revendications

1. Procédé de fabrication d'une pièce dentée (1, 2) pour un dispositif de pelletisation de matières déversables, en particulier de la fiente de volaille, dans lequel, dans une roue brute à denter (20) en forme de pot, qui comporte sur son pourtour extérieur une élévation (25) en forme de palier, qui correspond au diamètre extérieur de la couronne dentée (3, 4) à former, des alésages sont pratiqués dans la zone des entredents (9) à former puis ensuite, des dents (15) sont insérées par fraisage dans l'élévation (25), **caractérisé en ce que**
- tout d'abord, des alésages (21) sont pratiqués dans la roue brute à denter (20) en forme de pot dans l'élévation (25) en forme de palier dans la zone des entredents (9) à former, de manière à ce que leurs diamètres extérieurs correspondent à la largeur d'entredent (1) de l'entredent souhaité (9) et à ce que leur nombre corresponde sensiblement à la largeur (6) de l'entredent (9) et leur profondeur à la hauteur (h) de l'entredent (9),
- puis, des alésages (22) ayant un diamètre plus petit sont pratiqués dans les alésages (21) jusque dans la cavité intérieure (7, 8) de la roue brute à denter (20) en forme de pot et
- finalement, les entredents (9) sont nettoyés avec un outil de fraisage de manière à ce que des dents (15) apparaissent et à ce que les arêtes frontales (24) des dents (15) saillantes au-dessus du cercle primitif de référence (T) soient arrondies.

2. Procédé selon la revendication 1, **caractérisé en ce que** l'on utilise une fraise à queue comme outil de fraisage.
